# EUROPÄISCHE PATENTSCHRIFT

(11) **EP 1 466 828 B1**
(45) Veröffentlichungstag und Bekanntmachung des Hinweises auf die Patenterteilung: **20.09.2006**
(21) Anmeldenummer: 03028978.9
(22) Anmeldetag: 17.12.2003
(51) Int. Cl.: B64G 4/00

(54) **Versorgungs- und Inspektionsvorrichtung für Kleinplattformen im Orbit**
Supply and inspection device for small platforms in orbit
Dispositif d'approvisionnement et d'inspection pour des plates-formes petites dans l'orbite

(30) Priorität: 09.04.2003 DE 10316131
(43) Veröffentlichungstag der Anmeldung: 13.10.2004
(73) Patentinhaber: EADS Space Transportation GmbH, 85521 Ottobrunn (DE)
(72) Erfinder: Kerstein, Lothar, 27367 Sottrum (DE)
(74) Vertreter: Hansmann, Dierk

(56) Entgegenhaltungen:
- DE-A1- 10 036 840
- DE-C1- 19 846 327

## Beschreibung

Die Erfindung betrifft eine Versorgungs- und Inspektionsvorrichtung für kleine frei fliegende Plattformen im Weltraum.

Zur Unterstützung und Aufrechterhaltung des Betriebes von kleinen frei fliegenden automatischen Plattformen im Orbit sind geeignete Betriebsanlagen und Serviceeinrichtungen erforderlich, die die permanente Verfügbarkeit dieser Plattformen gewährleisten und die auf ihnen durchzuführenden operationellen Abläufe optimieren. Dies gilt insbesondere bei Missionen zur Unterstützung von Außenbord-Aktivitäten von Astronauten, sogenannten EVA, wie sie beispielsweise im Rahmen des Space Shuttle, von Raumstationen oder von künftigen bemannten interplanetaren Missionen möglich und geplant sind.

Aufgabe der Erfindung ist es, eine Versorgungs- und Inspektionsvorrichtung für kleine frei fliegende Plattformen im Weltraum bereitzustellen, durch die sowohl die Betriebskosten für Raumstationen als auch das Risiko für die in diesen Raumstationen tätigen Astronauten erheblich reduziert werden können.

Die Erfindung löst diese Aufgabe durch eine Vorrichtung mit den kennzeichnenden Merkmalen des Patentanspruchs 1. Vorteilhafte Weiterbildungen der Versorgungs- und Inspektionsvorrichtung nach der Erfindung sind in den weiteren Ansprüchen angegeben.

Durch die Bereitstellung einer externen Servicevorrichtung, die vorzugsweise im Nahbereich der Crew-Schleuse angeordnet wird und die für Astronauten leicht zugänglich ist, können Außenbord-Aktivitäten von Astronauten auf ein Minimum reduziert werden bzw. gegebenenfalls vollständig entfallen. Dies ist dadurch möglich, daß die frei fliegende Plattform automatisch oder mittels einer Überwachungs- und Kontrollstation von den Astronauten innerhalb der Raumstation gesteuert werden und somit der Astronaut im Inneren der Raumstation verbleiben kann. Dabei übernimmt und konditioniert die Versorgungs- und Inspektionsvorrichtung nach der Erfindung die Plattform bis zu deren nächsten Missionsauftrag, der wiederum von der erfindungsgemäßen Servicevorrichtung aus gestartet wird.

Die erfindungsgemäße Versorgungs- und Inspektionsvorrichtung stellt dabei die folgenden unterstützenden Funktionen für den automatisierten Betrieb der Plattform zur Verfügung:
- Transport in den Weltraum,
- Zwischenlagerung im Orbit,
- Systemerhalt,
- Schutz vor Meteoriteneinschlag und kosmischer Strahlung,
- thermische Konditionierung,
- eingebautes Equipment zur automatischen Fehlererkennung,
- Energieversorgung, Wiederaufladen von Batterien,
- Freilassen der Plattform aus der Servicevorrichtung für die Mission,
- Kommunikation mit der Plattform,
- Annäherung an die Servicevorrichtung,
- Einfangen und festmachen der Plattform in der Servicevorrichtung,
- Handhabung der Schnittstellen für die Astronauten (Handläufe)

Optional ist außerdem eine Betankung der zu versorgenden Kleinplattform in der Servicevorrichtung möglich.

Die wesentlichen Vorteile der Versorgungs- und Inspektionsvorrichtung nach der Erfindung liegen unter anderem in ihrer sofortigen externen Verfügbarkeit und Einsatzbereitschaft sowie in der Möglichkeit einer Auswertung von Missionsdaten über die Inspektionsplattform. Ferner ist keine zeitraubende Vorbereitung der Astronauten für Außenbord-Aktivitäten bei kritischen Situationen, z. B. bei einem Unfall oder einer Kollision, erforderlich. In Notfallsituationen braucht die Mannschaft das Raumfahrzeug nicht zu verlassen.

Die als automatische Inspektionsplattform ausgebildete Versorgungs- und Inspektionsvorrichtung nach der Erfindung ist zudem äußerst flexibel und ermöglicht ein umfangreiches Einsatzspektrum. Ansonsten nicht zugängliche Bereiche können sicher angeflogen und inspiziert werden. Erreicht wird dies dadurch, daß die bei der bevorzugten Ausführungsform der Erfindung vorgesehene Plattform mit einer kugelförmigen und weichen Außenhaut ohne Vorsprünge und scharfe Kanten ausgestattet ist. Außerdem werden zur Vermeidung von Schäden während der Flugmanöver der Schub und die Fluggeschwindigkeit minimiert, so daß keine Beschädigungen entstehen können.

Das Risiko und die Kosten für Außenbord-Aktivitäten werden damit erheblich reduziert bzw. vollständig eliminiert. Schließlich ist durch die Erfindung eine Optimierung der operationellen Abläufe möglich.

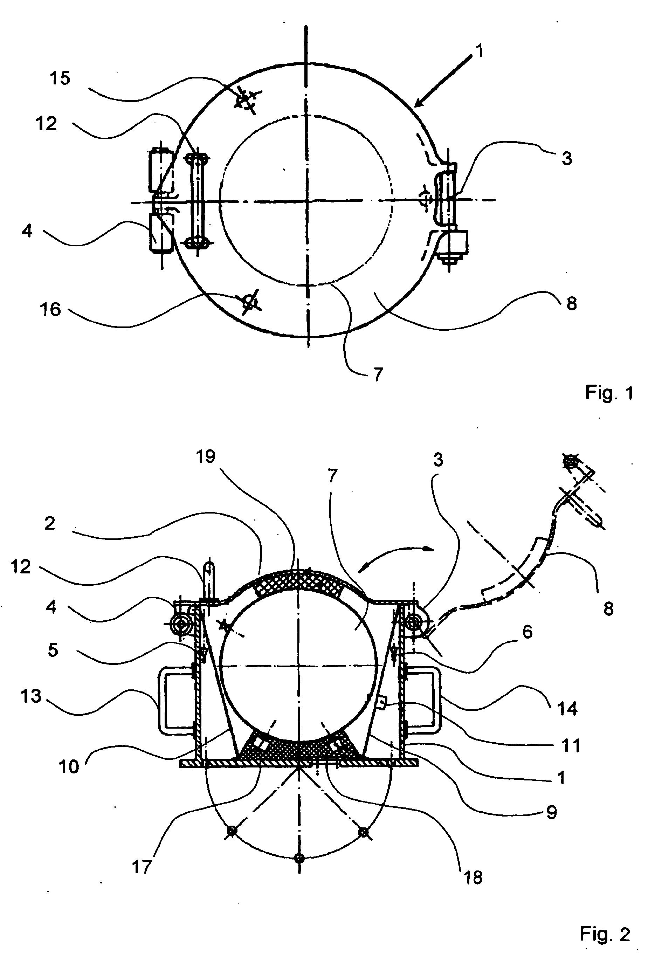

Nachfolgend soll die Erfindung anhand eines in der Zeichnung dargestellten Ausführungsbeispiels näher erläutert werden. Dabei zeigen
- Fig. 1: eine Versorgungs- und Inspektionsvorrichtung in seitlicher Ansicht und
- Fig. 2: die Vorrichtung gemäß Fig. 1 in einer geschnittenen Draufsicht.

Die Versorgungs- und Inspektionsvorrichtung besteht aus einem Leichtbau-Container 1 mit einer Öffnung 2, die mit einem motorgetriebenen Schließmechanismus 3 zum automatischen Öffnen und Verschließen einer die Öffnung 2 verschließenden Tür 8 sowie mit einem ebenfalls automatischen Mechanismus 4 für ein festes verriegeln dieser Tür 8 für den Transport versehen ist. Im Fehlerfall der Verschlußaktuatoren 3,4 können diese auch durch den Astronauten unter EVA-Bedingungen betätigt werden (Override Funktion). Der Schließmechanismus 3 der Öffnung 2 wird über wenigstens eine, im Fall des hier beschriebenen Ausführungsbeispiels über zwei im Container 1 angeordnete Lichtschranken 5 und 6 durch eine einfliegende, zu versorgende und/oder zu inspizierende Kleinplattform 7 ausgelöst und trägt mit dazu bei, die Plattform 7 einzufangen, sie zu befestigen und den nötigen Anpreßdruck für die elektrischen Kontaktflächen zum Aufladen der Plattformbatterien im Container 1 bereitzustellen.

Nach erfolgter Aufnahme der kugelförmigen Kleinplattform 7 drückt der Schließmechanismus 3 diese am Boden des Containers 1 fest und stellt damit eine Verbindung zu einer in der Zeichnung nicht dargestellten Überwachungs- und Kontrollstation im Inneren der Raumstation her. Diese übernimmt die Überwachung und Ansteuerung sowohl der Plattform 7 als auch der Versorgungs- und Inspektionsvorrichtung selbst sowie die spätere Steuerung und Überwachung etwaiger Missionen der Kleinplattform 7.

Im geschlossen Zustand der Versorgungs- und Inspektionsvorrichtung werden die lebensnotwendigen Funktionen der Kleinplattform 7 überwacht und diese wird entsprechend konditioniert. Das Aufladen ihrer Batterien erfolgt über eine kraftlos zu lösende Verbindung zwischen einer in der Versorgungs- und Inspektionsvorrichtung angeordneten, mittels Solargeneratoren aufladbaren Stromquelle 18 und an der Plattform 7 befindlichen induktiven Elementen 17.

Zur Unterstützung des Anfluges der zu versorgenden Kleinplattformen an die erfindungsgemäße Versorgungsund Inspektionsvorrichtung und zur Orientierung innerhalb dieser Vorrichtung sind Markierungen und/oder Reflektoren bzw. Leuchtdioden 15, 16 im Inneren am oberen Rand des Containers 1 verteilt angeordnet. Zusätzlich ist der Container 1 in seinem Inneren mit trichterförmig ausgebildeten Wänden 9, 10 ausgestattet, um die Plattform 7 im Container 1 zu zentrieren, wobei diese an entsprechend ausgebildeten Dämpfern 19 aus einem Schaummaterial anliegt. Während ihres Anfluges wird die Plattform 7 zusätzlich von im Container 1 befindlichen Kameras überwacht, um gegebenenfalls die Flugmanöver korrigieren zu können.

Ein photoelektrischer Schalter 11, der in einer der trichterförmigen Innenwände 9, 10 des Containers 1 angebracht ist, detektiert die erfolgreiche Positionierung der Plattform 7 im Inneren des Containers 1 und veranlaßt ein automatisches Verschließen der Öffnung 2 durch die Tür 8. Für den Einsatz in einem bemannten Umfeld, z.B. in der Internationalen Raumstation ISS oder im Space Shuttle, ist der Container 1 ferner mit Handläufen 12 - 14 zur Unterstützung der Tätigkeit der Astronauten versehen.

Die Versorgungs- und Inspektionsvorrichtung ist geeignet, kleine frei fliegende Plattformen während ihrer gesamten Missionsdauer zu beherbergen und zu versorgen. Sie ist das Systembindeglied und ermöglicht eine automatisierte Mission im Nahbereich bemannter Raumfahrzeuge ohne eine Außenbord-Unterstützung durch Astronauten. Beim Transport übernimmt der Container 1 mit seiner Verriegelung außerdem auch die Transportlasten.

## Patentansprüche

1. Versorgungs- und Inspektionsvorrichtung für frei fliegende Plattformen im Weltraum, **gekennzeichnet durch** einen im Außenbereich einer Raumstation angeordneten, mit einer verschließbaren Öffnung (2) versehenen Container (1) zur Aufnahme einer zu versorgenden, kugelförmig ausgebildeten Plattform (7), die über einen Schließmechanismus einer die Öffnung (2) verschließenden Tür (8) im Inneren des Containers (1) fixierbar sind.

2. Vorrichtung nach Anspruch 1, **dadurch gekennzeichnet, daß** der Schließmechanismus (3) über einen Motor antreibbar ist.

3. Vorrichtung nach Anspruch 2, **dadurch gekennzeichnet, daß** der Schließmechanismus (3) über wenigstens eine im Container (1) angeordnete Lichtschranke (5, 6) durch die zu versorgende Plattform (7) auslösbar ist.

4. Vorrichtung nach Anspruch 3, **dadurch gekennzeichnet, daß** auf der Innenseite einer die Öffnung (2) verschließenden Tür (8) mit den Lichtschranken (5, 6) zusammenwirkende Markierungen und/oder Reflektoren (15, 16) angeordnet sind.

5. Vorrichtung nach einem der Ansprüche 1 bis 4, **dadurch gekennzeichnet, daß** der Container (1) in seinem Inneren mit trichterförmig ausgebildeten wänden (9, 10) ausgestattet ist.

6. Vorrichtung nach einem der Ansprüche 1 bis 5, **dadurch gekennzeichnet, daß** im Container (1) eine Kamera angeordnet ist.

7. Vorrichtung nach einem der Ansprüche 1 bis 5, **dadurch gekennzeichnet, daß** in einer der Innenwände (9, 10) des Containers (1) ein photoelektrischer Schalter (11) zur Detektierung der Positionierung der Plattform (7) angebracht ist.

## Claims

1. Supply and inspection device for freely floating platforms in space, **characterized by** a container (1) arranged in the external area of a space station and provided with a closable opening (2) for receiving a spherically formed platform (7) to be supplied, which platform is fixable in the interior of the container (1) via a closing mechanism of a door (8) closing the opening (2).

2. Device according to claim 1, **characterized in that** the closing mechanism (3) is drivable by a motor.

3. Device according to claim 2, **characterized in that** the closing mechanism (3) is operable by the platform (7) to be supplied via at least one light barrier (5, 6) arranged in the container (1).

4. Device according to claim 3, **characterized in that** arranged on the inside of a door (8) closing the opening (2) are markings and/or reflectors (15, 16) interacting with the light barriers (5, 6).

5. Device according to one of claims 1 to 4, **characterized in that** the container (1) is fitted in its interior with walls (9, 10) formed in the shape of a funnel.

6. Device according to one of claims 1 to 5, **characterized in that** a camera is arranged in the container (1).

7. Device according to one of claims 1 to 5, **characterized in that** fitted in one of the internal walls (9, 10) of the container (1) is a photoelectric switch (11) for detecting the positioning of the platform (7).

## Revendications

1. Dispositif d'approvisionnement et d'inspection pour des plates-formes se déplaçant librement dans l'espace, **caractérisé par** un conteneur (1) agencé dans la zone externe d'une station spatiale et pourvu d'une ouverture à fermeture (2) pour recevoir une plate-forme sphérique (7) servant à approvisionner, qui peut être fixée à l'intérieur du conteneur (1) via un mécanisme de fermeture d'une porte (8) fermant l'ouverture (2).

2. Dispositif selon la revendication 1, **caractérisé en ce que** le mécanisme de fermeture (3) peut être entraîné par un moteur.

3. Dispositif selon la revendication 2, **caractérisé en ce que** le mécanisme de fermeture (3) peut être déclenché, à l'aide d'au moins un dispositif photoélectrique (5, 6) agencé dans le conteneur (1), par la plate-forme (7) servant à approvisionner.

4. Dispositif selon la revendication 3, **caractérisé en ce que** des marquages et/ou des réflecteurs coopérant avec les dispositifs photoélectriques (5, 6) sont agencés sur la face interne d'une porte (8) fermant l'ouverture (2).

5. Dispositif selon l'une quelconque des revendications 1 à 4, **caractérisé en ce que** le conteneur (1) est équipé, à l'intérieur, de parois conformées en trémie (9, 10).

6. Dispositif selon l'une quelconque des revendications 1 à 5, **caractérisé en ce qu'**une caméra est agencée dans le conteneur (1).

7. Dispositif selon l'une quelconque des revendications 1 à 5, **caractérisé en ce qu'**un commutateur photoélectrique (11) est monté dans une des parois internes (9,10) du conteneur (1) pour détecter le positionnement de la plate-forme (7).
